Europäisches Patentamt

(19) European Patent Office

Office européen des brevets

(11) Publication number: **0 060 085**
**B1**

(12) **EUROPEAN PATENT SPECIFICATION**

(45) Date of publication of patent specification: **16.07.86**

(51) Int. Cl.⁴: **G 02 B 6/10, C 03 B 37/02**

(21) Application number: **82301088.9**

(22) Date of filing: **03.03.82**

(54) Infrared optical fiber.

(30) Priority: **06.03.81 JP 31152/81**
**08.07.81 JP 105571/81**

(43) Date of publication of application:
**15.09.82 Bulletin 82/37**

(45) Publication of the grant of the patent:
**16.07.86 Bulletin 86/29**

(84) Designated Contracting States:
**DE FR GB NL**

(56) References cited:
**DE-B-2 546 162**
**FR-A-2 384 722**
**US-A-3 980 459**
**US-A-4 188 089**
**US-A-4 203 743**

The file contains technical information
submitted after the application was filed and
not included in this specification

(73) Proprietor: **Hitachi, Ltd.**
**5-1, Marunouchi 1-chome**
**Chiyoda-ku Tokyo 100 (JP)**

(72) Inventor: **Katsuyama, Toshio**
**Hitachiowada Apartment House D202**
**47-1, Akatsukicho-1-chome Hachioji-shi (JP)**
Inventor: **Matsumura, Hiroyoshi**
**Komamusashidai 70-3 264-61, Kubo**
**Hidakamachi Iruma-gun Saitama-ken (JP)**
Inventor: **Suganuma, Tsuneo**
**17-5, Nakaarai-5-chome**
**Tokorozawa-shi (JP)**

(74) Representative: **Goldin, Douglas Michael et al**
**J.A. KEMP & CO. 14, South Square Gray's Inn**
**London WC1R 5EU (GB)**

(56) References cited:

**THE BELL SYSTEM, Technical journal, 1964, vol
43, no 4, part 2, pages 1783-1809.**
**APPLIED PHYSICS, vol 48, no 3, march 1977,
pages 1212-1216.**

Courier Press, Leamington Spa, England.

## Description

The present invention relates to a process for producing an optical fiber capable of transmitting infrared beam.

Heretofore, optical fibers are produced from materials of silicate glass, but the materials of silicate glass have a disadvantage in that they transmit only light beams of up to wavelength of about 2 μm and absorb substantially all other beams of longer wavelength by absorption due to lattice vibration. Thus, beams of wavelength of 10.6 μm from a $CO_2$ laser for use, for example, in laser surgery and laser welding, etc. cannot be transmitted through fibers of silicate glass. Accordingly, a search has been made for materials capable of transmitting beams of wavelength from about 2 μm to about 20 μm, and as a result chalcogenide glass has been regarded as a promising material for the said range of wavelengths. For example, "Infrared Physics, 1965, Vol. 5 pp 69—80" discloses infrared optical fibers of As-S glass. Conventional optical fiber of chalcogenide glass is produced from powder of such metal as As, Si, Ge, P, etc., and chalcogen as a starting material by melting for a prolonged time. Thus, the conventional process has the disadvantage that impurities contained in the starting material powder of metal and chalcogen are transferred into the product glass, thereby increasing light transmission loss. Furthermore, the conventional process has more chance of contamination by impurities during the melting, and also requires substantial time for melting and homogenizing the powder of metal and chalcogen.

The optical fiber is constructed such that the core is made from a material of higher refractive index than is the clad surrounding the core to utilize total reflection at the interface between the core and the clad to transmit beams. However, when a beam of a high output level, for example, 100 W, such as $CO_2$ laser beam, is transmitted therethrough, the core material itself reaches such a high temperature as 100°—400°C due to the absorption of beams by the core material, which causes thermal breakage or deterioration of mechanical strength of the core material. Furthermore, considerable heat generation takes place particularly at the end face of optical fiber, for example, due to fine dirts thereon or due to fine irregularities therein, and special care is taken for its protection. Consequently, there has been a restriction to the power level of input beams.

On the other hand, MCVD process is well-known as one of the conventional processes for producing optical fiber of silicate glass. According to the MCVD process, a glass film serving as a clad and a core, or a glass film serving as a core is deposited onto an inner wall of a glass tube of quartz, etc. by the so-called CVD process utilizing a chemical vapor reaction, then the glass tube is heated, thereby collapsing the hollow part and forming a rod-like optical fiber preform, and the preform is drawn with heating, thereby forming optical fiber, as disclosed in so many publications, for example, US—A—4,203,743; JP—A—29953/76, etc.

The following references are cited to show the state of art;

    i) Infrared Physics, 1964, Vol. 4 pp. 213—221,

    ii) Infrared Physics, 1965, Vol. 5, pp. 69—80,

    iii) US—A—4,203,743,

    iv) JP—A—29953/76, and

    v) The Bell System Technical Journal, 1964, Vol. 43, pp. 1783—1809.

US—A—4,188,089 describes the production of optical fibers comprising glass cores containing predominantly S, Se and/or Te anions and Ge, Si, P, B, As, Sb and/or Ti cations by vapour phase deposition from the halides of the required elements.

An object of the present invention is to provide a process for producing infrared optical fiber with low transmission loss, where the said problems in producing infrared optical fiber from chalcogenide glass, that is, the problems of contamination of impurities and melting for a prolonged time have been solved.

Another object of the present invention is to provide a process for readily producing infrared optical fiber where the said problem of heat generation has been solved.

The foregoing objects can be attained according to the present process for producing an infrared chalcogenide optical fiber, which comprises:

    i) a step of introducing a gas containing at least one compound of an element selected from Si, Ge, As, P and Sb and at least one compound of an element selected from S, Se and Te, into a glass tube and heating the glass tube, thereby depositing onto the inside wall of the glass tube chalcogenide glass resulting from chemical vapor reaction of the compounds, and

    ii) a step of heating the glass tube from step i) and drawing the tube into a fiber at a high temperature, characterised in that one of the compounds is a hydride and the other compound is a hydride or a halide. In the step ii), the glass tube is heated at a high temperature to collapse the tube, and then drawn at a much higher temperature, whereby solid optical fiber can be obtained. Hollow optical fiber can also be obtained by heating and drawing the glass tube in a hollow state without collapsing, and dry air or infrared transmission liquid can be filled into the hollow fiber. In the case of solid fiber, the glass tube can be heated and drawn as such.

According to the present process, infrared optical fiber of high performance can be produced without the above-mentioned problems, that is, without any fear of contamination of impurities and any necessity for melting for a prolonged time.

It is essential in the present process to use a hydride and either a halide or a hydride compound of the elements as starting materials in place of the powder or two halides of the metal, and chalcogen element as in the conventional· process.

Furthermore, according to the present process, glass breakage due to heat generation, which has been a bottleneck in the prior art, can be avoided by using hollow fiber, and infrared optical fiber capable of transmitting a high energy level beam can be produced thereby. This is based on transmission of $HE_{11}$ mode in a hollow waveguide of hollow optical fiber.

Optical fiber of high infrared transmittance can be obtained by making the clad from chalcogenide glass of high refractive index and high infrared transmittance while using air as the core. A large number of pseudo-transmitted modes (leaky modes) can be transmitted through such hollow fiber. Different from the conventional optical fiber with core of high refractive index, the pseudo-transmitted modes are waves transmitted while producing transmission loss, among which the lowest order mode ($HE_{11}$ mode) has the least transmission loss.

According to "The Bell System Technical Journal, 1964, Vol. 43, p.p. 1783—1807", the transmission loss $\alpha$ of $HE_{11}$ mode in a hollow fibre is given by the following formula:

$$\alpha = \left( \frac{2.405}{2\pi} \right)^2 \frac{\lambda^2}{a^3} \cdot \frac{\frac{1}{2}(n^2+1)}{\sqrt{n^2-1}} \qquad (1)$$

where $n$ represents the refractive index of glass, $\lambda$ the wavelength of light and $a$ the radius of the hollow part. When $n=\sqrt{3}$ in formula (1), $\alpha$ takes the minimum value, i.e. $\alpha=1.8\ \lambda^2/a^3$ (dB). The refractive index of chalcogenide glass is usually $\bar{n}=2.5$, where the transmission loss is 2.01 $\lambda^2/a^3$ (dB). When the wavelength of light is 10.6 μm and $a=2$ mm, the transmission loss will be 0.028 dB/m, which is small enough, as compared with the ordinary glass and crystal, and such optical fiber can be used satisfactorily as a transmission path for high energy level beams.

Another feature of the hollow fiber produced according to the present process is use of chalcogenide glass of low transmission loss as a clad. Substantially all of the energy of the beams transmitted through the fiber passes through the hollow part, and thus the electromagnetic field passing through the class is small even with a high incident power, and even if the clad has transmission loss of 1 dB/m, the temperature increase of the glass by absorption is small.

The said step i) can follow the well known MCVD process except for the starting material. When solid fiber is produced, the step ii) can also follow the well known MCVD process. When hollow optical fiber is produced, the glass tube from the step i) is drawn at a heating temperature and in a drawing ratio such as to avoid collapsing of the glass tube while keeping the glass tube in a hollow state. The necessary heating temperature and the drawing ·ratio can̄ be determined by simple preliminary test.

Any material can be used for the glass tube, so long as it can be drawn at a high temperature together with the deposited chalcogenide glass. Usually, quartz glass, Pyrex glass, lead glass, etc. are used. When solid fiber is produced, collapsed optical fiber preform with the said glass tube as a crust can be drawn as such, but when the crust is removed from the preform by guiding or chemical etching and then the preform freed from the rust is drawn, infrared optical fiber consisting only of chalcogenide glass can be obtained. In the latter case, any material can be used for the glass tube, so long as it can be collapsed at a high temperature together with the deposited chalcogenide glass.

When the starting material is in a gaseous state at room temperature in the said step i), it can be directly introduced into the glass tube, but when it is in a liquid state at room temperature, it is bubbled with an inert gas such as Ar, etc., and the generated vapor is introduced into the glass tube together with the inert gas as a carrier gas.

Fig. 1 is a schematic diagram showing an apparatus for depositing chalcogenide glass onto the inside wall of the glass tube by local heating of the glass tube according to one embodiment of the present invention.

Fig. 2 is a schematic diagram showing an apparatus for depositing chalcogenide glass onto the inside wall of a glass tube by uniform heating of the glass tube.

Fig. 3 is a schematic diagram showing an apparatus for depositing chalcogenide glass onto the inside wall of a glass tube whose heating part for reaction is separated from a deposition part.

Fig. 4 is a cross-sectional view of hollow fiber having a chalcogenide glass layer on the inside wall of a glass tube.

Fig. 5 is a schematic view showing an apparatus for depositing chalcogenide glass onto the inside wall of a glass tube by local heating of the glass tube according to another embodiment illustrative of the state of the art.

The present invention will be described in detail below by way of an example of producing As-S glass fiber, referring to the drawings.

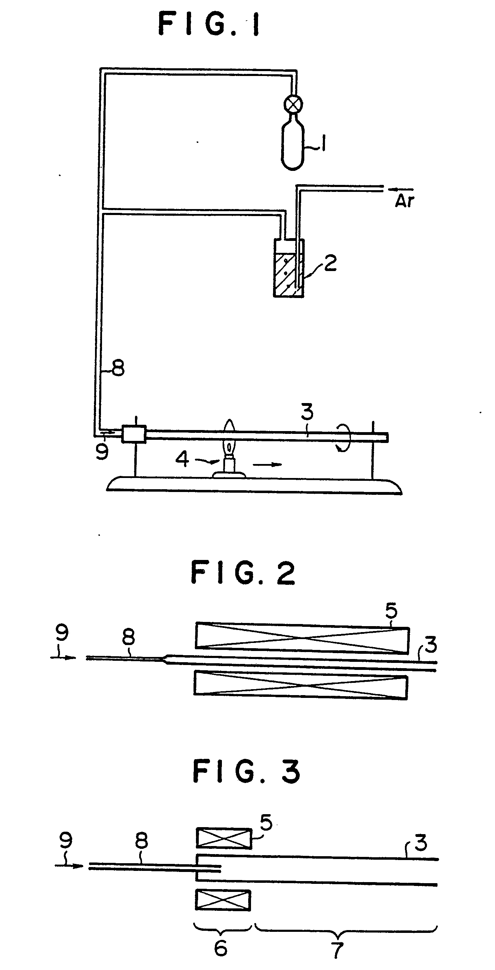

In the production of As-S fiber glass, $AsCl_3$ and $H_2S$ are used as starting materials. $AsCl_3$ is in a liquid state at room temperature, and thus a bubbler 2 is used as shown in Fig. 1, $AsCl_3$ is placed in the bubbler 2 and bubbled with Ar. $AsCl_3$ is introduced into a glass tube 3 through a gas line 8 together with Ar. On the other hand, $H_2S$ is in a gaseous state at room temperature, and is led to the glass tube 3 through the gas line 8 from a cylinder 1 directly. That is, a raw material gas of $AsCl_3$, $H_2S$ and Ar in mixture is led to the glass tube 3 through the gas line 8 in the arrow direction 9.

Then, the raw material gas is heated in the glass tube 3 and thermally decomposed to deposit As-S onto the inside wall of the glass tube 3. Heating can be carried out by an electric furnace or a gas burner. In Fig. 2 heating is carried out by a gas burner 4.

In Fig. 1, the glass tube 3 is locally heated by the gas burner 4, and the gas burner 4 is simultaneously moved in the longitudinal direction of the tube to obtain a deposited film of uniform composition and uniform thickness in the longitudinal direction. It is also possible to rotate the tube to form a uniform deposit in the circumferential direction.

Such local heating is however one example, and the glass tube 3 can be heated to the full length of glass tube by an electric furnace 5, as shown in Fig. 2, or a heating part 6 for chemical vapor reaction of the raw material gas can be separated from a deposition part 7 usually at a lower temperature than that of the heating part, as shown in Fig. 3. Anyway, the raw material gas mixture is introduced into the glass tube 3 through the gas line 8 in the arrow direction 9.

The glass tube onto whose inside wall As-S glass is deposited in the foregoing manner is heated and drawn into fiber. In the production of solid fiber, usually the As-S glass-deposited glass tube is heated and collapsed to form optical fiber preform, and then the preform is drawn at a much higher temperature, whereas in the production of hollow fiber, the As-S glass-deposited glass tube is directly heated and drawn so that no collapsing can occur. In the production of solid fiber, the As-S glass-deposited glass tube can be also directly heated and drawn without forming the preform.

First of all, the production of solid fiber will be described in detail below:

The As-S glass-deposited glass tube is further heated and collapsed. This heating can be local heating by a burner, where the heating part is moved in the longitudinal direction of the glass tube. In that case, heating can be uniformly carried out in the circumferential direction of the glass tube by rotating the glass tube. Collapsing can proceed under the inside pressure of the glass tube equal or a little inferior to the atmosphere, but the As-S glass is liable to vaporize, the tube inside is made vacuum and the ends of the tube are sealed before the collapsing is carried out. The thus prepared solid rod is called "preform".

Then the preform is drawn into fiber in the same manner as in the conventional drawing of a preform of quartz glass fiber. In that case, the resulting fiber has oxide glass, which is the constituent of the glass tube 3, as a crust. By removing the oxide glass from the preform by guiding or chemical etching beforehand, optical fiber consisting only of As-S glass can be obtained.

The foregoing process is directed to the production of As-S glass fiber having a uniform composition in the radial direction. Clad-type fiber of double layer structure consisting of a core of high refractive index and a clad of low refractive index, or graded index-type fiber whose refractive index is gradually increased from the peripheral part toward the center can be produced by changing the composition in the radial direction in the following manner.

The composition can be changed in the radial direction by reciprocally moving the burner heating the glass tube several times in the longitudinal direction of the glass while changing the composition of raw material gas supplied to the glass tube at every reciprocation or at a specific reciprocation. The composition of raw material gas can be changed by changing a mixing ratio of $AsCl_3$ to $H_2S$, or by adding other additive such as $GeCl_4$ thereto to change the concentration.

Production of hollow fiber will be described in detail below.

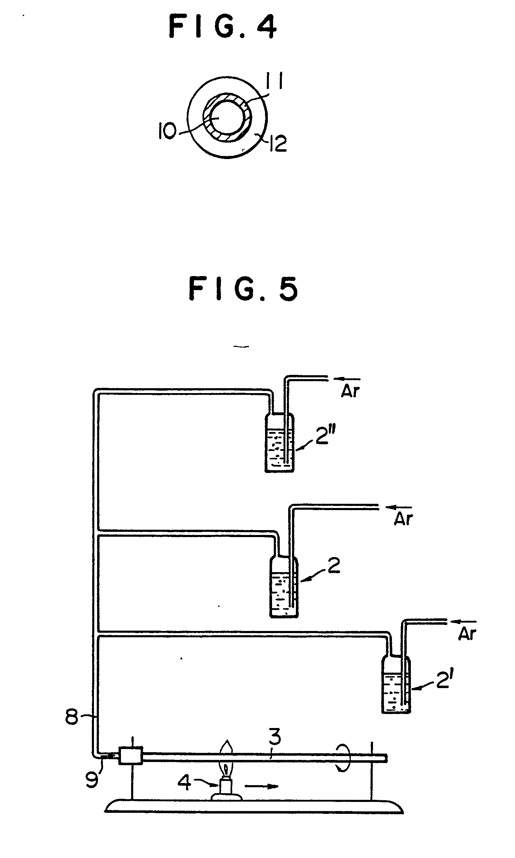

The As-S glass-deposited glass tube is drawn in the same manner as in the conventional drawing of quartz glass fiber. In that case, heating temperature and drawing ratio must be selected so as not to collapse the glass tube. The thus produced optical fiber is hollow fiber having As-S glass on the inside wall of the glass tube, as shown in Fig. 4, where numeral 10 is an air core, numeral 11 a chalcogenide layer, and numeral 12 a drawn glass tube.

In the foregoing, only the case of using $AsCl_3$ and $H_2S$ as the starting materials has been described for both solid fiber and hollow fiber. Besides the foregoing starting materials, $AsH_3$, $AsBr_3$, $AsI_3$, etc. can be also used for As, and $S_2Cl_2$, $SCl_2$, etc. for S.

In the foregoing, description has been made only of the fiber of As-S glass. The present process is however not limited only to the As-S glass fiber, but also to other chalcogenide glass fibers. Other chalcogenide glass that the As-S glass includes: (1) Ge-Sb-S; (2) Ge-Sb-Se; (3) Ge-As-S; (4) Ge-As-Se; (5) Ge-S-P; (6) Ge-Se-P, etc. Typical compositions of chalcogenide glass for use in the present process are combinations of at least one of Si, Ge, As, P and Sb with at least one of S, Se, and Te. Besides the foregoing elements, Cl, Br or I can be added thereto. The present process is applicable not only to the compositions as defined above, but also to chalcogenide glass of other compositions as defined above.

As described above, the present process has such advantages as less chance for contamination of a product with impurities and no necessity for melting for a prolonged peroid to homogenize the composition, and is very effective for production of optical fiber with low transmission loss.

Reference Example 1 (illustrative of the state of the art)

$GeCl_4$ and $SbCl_5$ were used as metal compounds and $Se_2Cl_2$ as a chalcogen compound as starting materials, and the apparatus shown in Fig. 5 was used. $GeCl_4$ was placed in a bubbler 2 and bubbled with Ar. $SbCl_5$ was placed in a bubbler 2' and bubbled with Ar. $Se_2Cl_2$ was placed in a bubbler 2'' and bubbled with Ar. A raw material gas of $GeCl_4$, $SbCl_5$ and $Se_2Cl_2$ carried by

carrier Ar gas was introduced into a glass tube 3 of lead glass (outer diameter: 14 mm, inner diameter: 12 mm) through a gas line 8 in the arrow direction 9. $GeCl_4$, $SbCl_5$ and $Se_2Cl_2$ were all in a liquid state at room temperature and were bubbled at 20°C. The composition of the raw material gas was controlled by bubbling of Ar to 43 mg/s of $GeCl_4$, 30 mg/s of $SbCl_5$ and 137 mg/s of $Se_2Cl_2$.

Chemical vapor reaction was carried out by using an oxygen-hydrogen burner 4 reciprocating at a rate of 0.2 cm/s in the longitudinal direction of the glass tube 3, while rotating the glass tube 3 at 40 rpm. Heating temperature was found to be 600°C by an optical pyrometer. After the heating oxygen-hydrogen burner 4 was reciprocated in the longitudinal direction of the glass tube 3 by 50 repetitions, the glass tube was fused at about 800°C to collapse the glass tube into a preform.

Then, the thus obtained preform was drawn at 800°C into optical fiber with a Ge-Sb-Se glass part having an outer diameter of 50 μm and a crust glass part having an outer diameter of 150 μm.

The glass tube consisted of lead glass, and the chalcogenide glass consisted of 28 mol.% Ge-12 mol.% Sb-60 mol.% Se. The thus obtained optical fiber had light transmission loss of 0.1 dB/m at the wavelength of 10.6 μm, and thus the infrared optical fiber with considerably smaller light transmission loss than that of the conventional optical fiber was obtained.

Reference Example 2 (illustrative of the state of the art)

A Ge-Sb-Se glass film was deposited on the inside wall of a glass tube in the same manner as in Example 1, except that a glass tube of lead glass having an outer diameter of 14 mm and an inner diameter of 13 mm was used and the heating oxygen-hydrogen burner 4 was reciprocated in the longitudinal direction of the glass tube by 100 repetitions.

The chalcogenide glass film-deposited glass tube was heated in an electric furnace at 800°C and drawn into hollow glass fiber. The hollow glass fiber had an outer diameter of 4 mm, an inner diameter of 1.5 mm and a chalcogenide glass film thickness of 300 μm.

The lead glass of the glass tube consisted of 57 mole.% $SiO_2$—12 mol.% $Na_2O+K_2O$—30 mol.% PbO, and the deposited chalcogenide glass had the same composition as in Example 1.

The thus obtained hollow infrared optical fiber had light transmission loss of 0.7 dB/m at the wavelength of 10.6 μm, and had a temperature elevation by only a few tens of degree °C even with an incidental $CO_2$ laser beam of 50 W, and thus the infrared optical fiber with a high stability and small light transmission loss, as compared with those of the conventional optical fiber was obtained.

Reference Example 3 (illustrative of the state of the art)

In the foregoing Example 1, solid optical fiber having a uniform composition in the radial direction was produced, whereas in the present Example 3, glass fiber having changing composition in the radial direction was produced by using the same apparatus as shown in Fig. 5 and used in Example 1.

In the present Example 3, 43 mg/s of $GeCl_4$, 60 mg/s of $SbCl_5$ and 137 mg/s of $Se_2Cl_2$ as the starting materials were used up to 25th repetition of reciprocal movement of the burner in the longitudinal direction of the glass tube, and 43 mg/s of $GeCl_4$, 30 mg/s of $SbCl_5$ and 137 mg/s of $Se_2Cl_2$ were used from 26th repetition to 50th repetition. Other conditions were the same as in Example 1.

The thus obtained preform was drawn into fiber.

An optical fiber having light transmission loss of 0.01 dB/m at the wavelength of 10.6 μm was obtained.

It seem that considerably smaller light transmission loss in Example 3 than in Example 1 is due to the fact that the present fiber consisted of a core and a clad and had no substantial influence by the surrounding glass tube.

The thus obtained clad-type fiber had a core diameter of 50 μm, a clad thickness of 50 μm and total diameter of 150 μm, and the core consisted of 28 mol.% Ge—12 mol.% Sb—60 mol.% Se, and the clad consisted of 23.5 mole.% Ge—12 mol.% Sb—64.5 mol.% Se.

## Claims

1. A process for producing an infrared chalcogenide glass optical fiber, which comprises:

i) a step of introducing a gas containing at least one compound of an element selected from Si, Ge, As, P and Sb and at least one compound of an element selected from S, Se and Te, into a glass tube and heating the glass tube, thereby depositing onto the inside wall of the glass tube chalcogenide glass resulting from chemical vapor reaction of the compounds, and

ii) a step of heating the glass tube from step i) and drawing the tube into a fiber at a high temperature,

characterised in that one of the compounds is a hydride and the other compound is a hydride or a halide.

2. The process according to claim 1, wherein the deposited chalcogenide glass is a compound of at least one element selected from the group consisting of Si, Ge, As, P and Sb, and at least the element selected from the group consisting of S, Se and Te.

3. The process according to claim 1 or 2, wherein the step ii) comprises heating and collapsing the glass tube, thereby forming a solid optical fiber preform, and drawing the preform into a solid fiber at a high temperature.

4. The process according to claim 1 or 2, wherein the step ii) comprises drawing the glass tube into a hollow fiber without collapsing the glass tube.

5. The process according to claim 3, wherein the preform is drawn into a fiber at a high temperature after the crust of the preform has been removed.

## Patentansprüche

1. Verfahren zur Herstellung einer optischen Chalcogenidglasfaser zur Infrarotübertragung, umfassend die folgenden Schritte

(i) Einleiten eines Gases das mindestens eine Verbindung eines Elementes, ausgewählt aus Si, Ge, As, P und Sb, und mindestens eine Verbindung eines Elementes, ausgewählt aus S, Se und Te, enthält, in ein Glasrohr und Erwärmen des Glasrohrs, wobei aud die Innenwand des Glasrohrs aus der chemischen Reaktion der Verbindungen resultierendes Chalcogenidglas niedergeschalagen wird, und

(ii) Erwärmen des mit dem Schritt (i) erhaltenen Glasrohrs und Ziehen des Rohrs zu einer Faser bei hoher Temperatur,

dadurch gekennzeichnet, daß eine der Verbindungen ein Hydrid und die andere Verbindung ein Hydrid oder ein Halogenid ist.

2. Verfahren nach Anspruch 1, wobei das niedergeschlagene Chalcogenidglas eine Verbindung mindestens eines Elementes, ausgewählt aus der Gruppe Si, Ge, As, P und Sb, und mindestens eines Elementes, ausgewählt aus der Gruppe S, Se und Te, ist.

3. Verfahren nach Anspruch 1 oder 2, wobei im Schritt (ii) das Glasrohr zur Ausbildung einer massiven Vorform der optischen Faser erwärmt und kollabiert und die Vorform bei einer hohen Temperatur zu einer massiven Faser ausgezogen wird.

4. Verfahren nach Anspruch 1 oder 2, wobei in dem Schritt (ii) das Glasrohr ohne Kollabieren zu einer Hohlfaser ausgezogen wird.

5. Verfahren nach Anspruch 3, wobei die Vorform bei einer hohen Temperatur zu einer Faser ausgezogen wird, nachdem die Kruste der Vorform entfernt worden ist.

## Revendications

1. Procédé pour fabriquer une fibre optique pour rayonnement infrarouge, formée par un verre constitué sur la base d'un chalcogénure, comprenant:

i) une phase opératoire consistant à introduire un gaz contenant au moins un composé d'un élément choisi parmi Si, Ge, As, P et Sb et au moins un composé d'un élément choisi parmi, S, Se et Te, dans un tube en verre et à chauffer ce tube en verre, ce qui provoque le dépôt, sur la paroi intérieur du tube en verre, du verre constitué à partir d'un chalcogénure, obtenu sous l'effet de la réaction chimique des composés en phase vapeur, et

ii) une phase opératoire de chauffage du tube en verre obtenue lors de la phase opératoire i) et d'étirage du tube sous la forme d'une fibre à une température élevée,

caractérisé en ce que l'un des composants est un hydrure et que l'autre composant est un hydrure ou un halogénure.

2. Procédé selon la revendication 1, selon lequel le verre déposé, constitué à partir d'un chalcogénure, est un composé d'au moins un élément choisi dans le groupe comprenant Si, Ge, As, P et Sb et au moins un élément choisi dans le group comprenant S, Se et Te.

3. Procédé selon la revendication 1 ou 2, selon lequel la phase opératoire ii) comprend le chauffage et l'aplatissement du tube en verre, de manière à former ainsi une préforme d'une fibre optique pleine, et l'étirage de la préforme sous la forme d'une fibre pleine, à une température élevée.

4. Procédé selon la revendication 1 ou 2, selon lequel la phase opératoire ii) inclut l'étirage du tube de verre sous la forme d'une fibre creuse sans aplatissement du tube de verre.

5. Procédé selon la revendication 3, selon lequel la préform est étirée a6 une température élevée sous la forme d'une fibre, après retrait de la croûte de la préforme.

0 060 085

# F I G. 1

# F I G. 2

# F I G. 3

1

# FIG. 4

# FIG. 5